# EUROPEAN PATENT APPLICATION

(11) **EP 1 503 309 A1**
(43) Date of publication of application: **02.02.2005**
(21) Application number: 03017371.0
(22) Date of filing: 31.07.2003
(51) Int. Cl.: G06F 17/60

(54) **Data validity control in straight-through processing systems**

(71) Applicant: DEUTSCHE BÖRSE AG, 60487 Frankfurt am Main (DE)
(72) Inventor: Lammersdorf, Christoph c/o Deutsche Börse AG, 60487 Frankfurt am Main (DE); Schultz, Mario Michael c/o Deutsche Börse AG, 60487 Frankfurt am Main (DE); Grzebeta, Sven c/o Deutsche Börse AG, 60487 Frankfurt am Main (DE)
(74) Representative: Grünecker, Kinkeldey, Stockmair & Schwanhäusser Anwaltssozietät

(57) **Abstract**

A data processing apparatus, a device and a corresponding method for use in a straight-through processing system are provided. The apparatus comprises a data storage unit having data fields for storing a plurality of pairs of first and second data items. Each second data item includes validation information relating to the associated first data item of the respective pair. The validation information indicates at least one of a plurality of distinct validation levels. The apparatus further comprises a controller for assigning initial validation levels to second data items and updating assigned validation levels, and a first data interface unit for interfacing to at least one external device. The controller is arranged for sending at least one first data item stored in the data storage unit to an external device, and determining an updated validation level from feedback information received from a validity-relevant process performed by the external device.

## Description

### BACKGROUND OF THE INVENTION

### 1. Field of the Invention

The present invention relates to data processing apparatus, devices and methods, and in particular to techniques usable in straight-through processing systems.

### 2. Description of the Related Art

With increasing volumes, the securities handling has become increasingly automated since the late 1980s. The securities process may be seen as one process chain alongside the lifecycle of a security transaction - from deciding to place an order to the transfer of ownership of cash and securities. Within this process chain a high degree of automation may be important, as each manual or human interaction reduces transaction speed, leads to additional cost and increases the risk of operational errors. This goal is encapsulated in the idea of Straight Through Processing, or STP, which basically means the seamless, fully automated processing of securities (or other financial) transactions with computer-based systems and databases.

In a single system of computers with well-developed interfaces, STP is relatively easy to achieve. However, in the modern financial world numerous institutions communicate via various networks, protocols and standards with one another. For instance, US 6,513,019 B2 describes a financial consolidation and communication platform in a distributed network system. In addition, financial products are becoming increasingly complex. Thus, the STP chain is often interrupted and manual input or manual transfer between computer systems is necessary. Besides, the lack of standards and the amount of manual processes involved causes a significant error rate in the overall processes.

One point in the concept of STP is the use of "master data" (or "reference data"). Reference data may be used to identify and describe objects in the securities processing chains. Among those objects or entities are securities, other financial products, currencies, market participants (also known as "counterparties"), accounts, functional roles (such as "custodian", "accountant", "fund manager" etc) and transactions. These objects often need to be identifiable by a unique identifier (or a unique combination of identifiers) so that every participant can easily refer to these objects in their systems. Moreover, for each object, a set of properties, features and functions which are often required in one or more stages of the securities transaction process may be defined (descriptive data). In order to arrive at a normalized database, it may be desirable that this descriptive data is stored as master data (instead of capturing the data again every time the object appears in the process chain). Functional reference data may be linked to a date or an event. It may include corporate actions (such as dividend payments, coupon payments or splits), account events (such as changes of name of beneficial owner, changes of account currency) and changes to roles and counterparties (such as changes of standard settlement location for an institution). Reference data may include prices or valuations of financial objects.

As reference data for the securities transaction process is complex and as no central global database exists, reference data may also become a commercial product offered by various vendors. Then, many securities master file offerings exist, leading to discrepancies between the various databases. This, in turn, prompts errors in the processing chain, as various players along the securities transaction process chain use conflicting identifiers and/or descriptive data.

One approach to mitigate this adverse effect would be to consolidate master data information from various sources and validate ("scrub") and compare ("cleanse") this data. However, this process is costly, still unreliable and an inefficient duplication of efforts (as virtually each player in the securities transaction process chain would need to perform this consolidation task). Even though the quality of the consolidated master data would be better than the data delivered by a single vendor source, the problem of conflicting securities master files would be exacerbated, as each organisation would do its own reference data consolidation (often based on different sources and/or different validation principles).

Another approach would be to create a single hub for reference data. However, this would presuppose an industry-wide agreement and significant investment.

Given the conventional systems, there does presently not exist a technique for consolidating and validating reference data items, where the quality of reference data items can be easily and reliably managed. Moreover, the prior art may deal with processes in which reference data is used, and processes in which reference data is collected and stored, but these processes are handled in a completely different and separate manner with no synergetic effects, thus making it impossible to achieve a higher data quality and accuracy across the financial industry.

### SUMMARY OF THE INVENTION

It is therefore the object of the invention to provide a data processing apparatus, a device and a corresponding method for improved straight-through processing.

This object is solved by the invention as claimed in the independent claims.

Preferred embodiments are defined in the dependent claims.

Accordingly, a data processing apparatus for use in a straight-through processing system is provided. The apparatus comprises a data storage unit having data fields for storing a plurality of pairs of first and second data items. Each second data item may include validation information relating to the associated first data item of the respective pair. The validation information indicates at least one of a plurality of distinct validation levels. The apparatus further comprises a controller for assigning initial validation levels to second data items and updating assigned validation levels, and a first data interface unit for interfacing to at least one external device. The external device performs a validity-relevant process in the straight-through processing system. The controller is arranged for sending at least one first data item stored in the data storage unit to at least one of the external devices via the first data interface unit, and determining an updated validation level to be stored in the respective associated second data item, from feedback information received from the validity-relevant process performed by the external device.

Further, a device for performing a validity-relevant process in a straight-through processing system is provided, arranged for interfacing to the data processing apparatus.

Moreover, a method of operating a data processing apparatus in a straight-through processing system is provided. The method comprises storing a plurality of pairs of first and second data items in a database of the data processing apparatus. Each second data item may include validation information relating to the associated first data item of the respective pair. The validation information indicates at least one of a plurality of distinct validation levels. The method further comprises assigning initial validation levels to second data items, and updating assigned validation levels. The step of updating comprises sending at least one first data item stored in the database to at least one external device performing a validity-relevant process in the straight-through processing system, and determining an updated validation level from feedback information received from the validity-relevant process performed by the external device.

The feedback information may be success/failure information of the validity-relevant process performed by the external device.

The data processing apparatus may comprise a second data interface unit for interfacing to at least one external data source to receive first data items, and a third data interface unit for distributing information relating to stored first and second data items. The controller may be arranged for controlling the third data interface unit to distribute information relating to stored first and second data items only if the validation levels indicated by the validity information included in the respective second data items meet predefined conditions

The initial validation levels may be indications that information stored in the respective associated first data items is unconfirmed.

The data processing apparatus may comprise a second data interface unit for interfacing to at least one external data source to receive first data items, wherein the controller is arranged for assigning the initial validation levels to the second data items depending on the individual data sources of the respective first data items.

The data storage unit may further be arranged for storing a plurality of pairs of third and fourth data items. Each third data item relates to a group of first data items, and each fourth data item includes validation information relating to the associated third data item of the respective pair. The validation information indicates at least one of the plurality of distinct validation levels. The controller is arranged for handling the fourth data items in the same way as the second data items. The controller may further be arranged for assigning validation levels to be stored in fourth data items based on validation levels pertaining to the first data items in the respective groups to which the associated third data items relate. Moreover, the controller may be arranged for assigning validation levels to be stored in fourth data items based on the completeness of the data in the respective groups to which the associated third data items relate.

The data processing apparatus may further comprise a validation rules storage unit for storing validation rules indicating under which condition to assign which validation level, wherein the controller is arranged for determining updated validation levels by applying the validation rules stored in the validation rules storage unit. The data processing apparatus may further comprise an administration interface unit for receiving instructions to configure the validation rules stored in the validation rules storage unit.

The controller may comprise a switch for each process in the straight-through processing system, indicating whether this process is a validity-relevant process. The controller may be arranged for determining whether the respective switch is activated and deciding on the basis of the determined switch position whether the process is a validity-relevant process. The controller may also comprise a switch matrix indicating for each process in the straight-through processing system and each first data item, whether the respective process is a validity-relevant process when applied to the respective first data item. The controller may then be arranged for determining whether a switch matrix element is activated and deciding on the basis of the determined switch matrix element whether the process is a validity-relevant process for the respective first data item. Further, the first data interface unit may be arranged for further interfacing to at least one external device performing a non-validity-relevant process in the straight-through processing system. The controller may be arranged for sending first data items to external devices performing validity-relevant or non-validity-relevant processes, only if the respective validation levels meet predefined conditions.

The data processing apparatus may comprise a second data interface unit for interfacing to at least one external data source to receive first data items, wherein the controller may be arranged for determining the updated validation level also from data received through the second data interface unit. The controller may be arranged for determining the updated validation level from the received data by comparing received first data items with previously received first data items. The controller may further be arranged for determining the updated validation level from the received data by comparing first data items received from one source with first data items received from another source. The controller may further be arranged for determining the updated validation level from the received data by comparing received first data items with predefined values. The controller may further be arranged for determining the updated validation level from the received data by performing a consistency and/or completeness check. Moreover, the data received through the second data interface unit may be data manually input by an operator. The controller may be arranged for requesting manual input through the second data interface in case the feedback information received from the validity-relevant process does not meet predefined conditions. The controller may further be arranged for requesting manual input through the second data interface in accordance with predefined rules, independent from any feedback information received from the validity-relevant process.

The data processing apparatus may further comprise an audit trail storage for recording an audit trail for each pair of data items. The audit trail may comprise the date and time of a change of a data item, a data item identifier identifying the changed data item, previous values of the first and second data items, an indication on the reason for a change of a data item, and/or an indication on the user or process which triggered a change of a data item.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 is a block diagram illustrating the components and the functional structure of a reference data system according to a preferred embodiment of the invention;
FIG. 2 is a flowchart according to a preferred embodiment of the invention, illustrating the process of adding a new instance of a reference data object;
FIG. 3 is a flowchart according to a preferred embodiment of the invention, illustrating the process of assigning an initial validity level;
FIG. 4 is a flowchart according to a preferred embodiment of the invention, illustrating the process of adjusting a data validity level in a quality assurance process;
FIG. 5 is a flowchart according to a preferred embodiment of the invention, illustrating the process of adjusting a data validity level according to process results; and
FIG. 6 is a flowchart according to a preferred embodiment of the invention, illustrating the process of distributing data items to data users.

### DETAILED DESCRIPTION OF THE INVENTION

The illustrative embodiments of the present invention will be described with reference to the figure drawings wherein like elements and structures are indicated by like reference numbers.

According to a preferred embodiment, a reference data system is provided which collects, aggregates, validates, stores and distributes reference data items for objects in financial transactions processes. Among these objects may be securities (such as shares, bonds, warrants or unit trusts), other financial instruments (such as options, futures, credit lines, swaps, bespoke OTC contracts, currencies), corporate actions or securities events (such as dividend payments, coupon payments, splits, liquidation, exchanges of certificate) institutions (such as banks, fund promoters, issuers, central counterparties, exchanges, depositaries, regulators), calendars (trading calendar, settlement calendar), and transactions (settlement instructions, cash transfer instructions).

In the embodiment, an indication of a validity level for each data item can be made by assigning a level of validity to each data item stored. When a data item is stored in the reference data system for the first time the validity level may be set to "unconfirmed", indicating that no checking or validation has taken place yet. A more detailed level description (e.g. "high probability" or "weak quality") can be attached to the data item and would then be dependent on a quality rating of the source which has delivered that item.

Further, an indication of validity level for each reference data instance can be made by assigning a level of validity to each reference data instance. The validity level of an instance may depend on the data validity level of the individual data items which belong to that instance. The validity level may also be derived from the completeness of the data set which makes up the instance. The assignment of data validity levels may be rules-based and may be done fully automatically by the reference data system. Preferably, the before mentioned rules may be configured by an operator.

Moreover, a feedback can be provided from relevant electronic processes to influence the validity level indicator. This function updates the validity level according to the success or failure of the relevant process, after a data item has been used in a process that has been activated by a switch as "quality relevant". The assignment of data validity levels may be rules-based and may be done fully automatically by the reference data system. Preferably, the before mentioned rules may be configured by an operator. Data validity levels can be distributed by the reference data system to users (preferably via an electronic interface or a visual display).

In addition, the future behaviour of the system can be influenced by the validity level indicator. By this function, the validity level can influence future behaviour of processes in the reference data system or in connected systems (e.g. whether the data item will be used in the future by a process). In particular a process provided by the machine or triggered through an interface of the machine may be configured in such a way that it only uses or transfers data with certain validity levels (e.g. output to certain clients only if the validity level of the data item is not "wrong" or "unconfirmed").

Moreover, the validity indicator can be controlled and managed by data collection processes and by quality assurance processes. This function defines the validity indicator by data collection and data input processes. The reference data system collects data by data collection modules, which contain inbound interfaces to at least one data feed (e.g. a data feed from a vendor or from a securities custodian or bank) and a processor which is capable of checking the incoming data by applying defined rules to each data items (e.g. comparison to previously received data items, comparison to data items received from other sources, comparison to absolute figures, consistency and completeness checks). The result of these checks is translated in an overall validity level, which in turn defines the validity indicator for a data item. The initial validity indicator may then be valid until it is changed by another process of the reference data system or by manual intervention from an operator. The assignment of data validity levels may be rules-based and may be done fully automatically by the reference data system. Preferably, the before mentioned rules may be configured by an operator.

Another control and management of the validity indicator can be done by data input processes which allow for entering data manually via an input device. Again the data may be checked by a processor in the input module according to the methods described above. For manual input, a supervisor operator may define a general validity to data which is captured manually, depending on the quality of the input process (e.g. dual or multiple control, quality of source information, data transmission quality). This can serve as an additional criterion for the processor in the determination of the validity indicator. The assignment of data validity levels may be rules-based and may be done fully automatically by the reference data system. Preferably, the before mentioned rules may be configured by an operator. The initial validity indicator may be valid until it is changed by another process of the reference data system or by manual intervention from an operator.

Further, an audit trail can be recorded for each data item. The audit trail can be maintained by the data validity control process and may be stored in an audit trail storage. The audit trail can contain, among other data, the date and time of change, the data item affected, the previous value of the data item, the reason why it was changed, and the user or process which triggered the change.

Moreover, reference data and validity indicator may be distributed to users. For this purpose, outbound interfaces may be provided to distribute stored reference data items for objects from financial transaction processes. In addition, the outbound interface may be configurable by a set of switches to also distribute the validity indicator for each data item or for a defined set of data items. The data outbound interface may also be configured in such a way as to only distribute reference data items with certain defined data validity levels.

These and other embodiments will be discussed in more detail below. First, some terminology definitions are given which may apply to any description of an embodiment of the present invention.

"Straight-through processing" refers to automated end-to-end processing of transactions from initiation to resolution, or to a part thereof. The transactions may be transactions for financial instruments, or other kinds of transactions.

"Straight-through processing system" refers to networked computer systems or environments capable of performing such a straight-through processing.

"Object" refers to an abstract type of reference data. Examples may be "organisation", "banking institution", "security", "financial product", "role", "account", "person" or "transactions".

"Instance" refers to a concrete specimen of said objects. To give an example, "ABC Bank" (and all data related to it) can be regarded as an instance of the object "banking institution".

"Data item" is a piece of information, e.g., relating to an object or an instance. To give an example, the SWIFT (Society for the Worldwide Interbank Financial Telecommunication) code for the headquarters of the instance "ABC Bank" may be a data item.

"Corporate action" denotes an event relating directly to the issued certificates or to the properties of a financial instrument. Often such corporate actions are triggered by a financial transaction of the issuing company. Other corporate actions are caused by external developments, e.g. exchange of certificates denominated in DM into certificates denominated in euro. Examples of corporate actions are dividend payments, interest payments, repayment of principal, share splits, name change of a financial instrument or an institution, exchange of certificates etc.

"Data validity indicator" is a piece of data that reflects the quality of a data item that has been stored by the invention. It is defined by rule-based mechanisms of the invention. Those rules may refer to completeness, correctness, coherence and consistency of information from different sources, plausibility or timeliness. A data validity level can be assigned to a single data item or to a set of data (e.g. all data items of an instance).

It is to be noted that the above terminology definitions serve to illustrate functions of the invention and do not necessarily imply a specific database or computer language implementation.

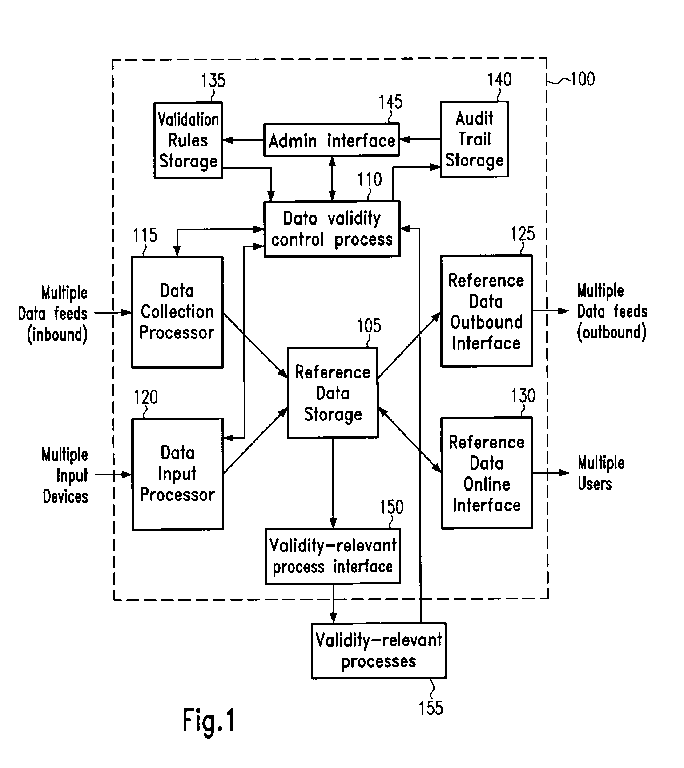

Referring now to the figures, and in particular to FIG. 1 which illustrates a reference data system according to a preferred embodiment, the system mainly comprises a computer system 100 which may be a single workstation located in a distributed network. In another embodiment, the computer system 100 can be realized by multiprocessor platforms or a plurality of interconnected single-processor computers operating in a LAN (Local Area Network).

In the computer system 100 of FIG. 1, a reference data storage 105 receives, stores and retrieves data items, including the respective data validity item for each data item

A data validity control process 110 controls the assignment and manipulation of validity levels to data items. Validity levels can be assigned or changed before a data item is loaded into the reference data storage 105 or when it is already stored in the reference data storage 105.

A validation rules storage 135 stores the rules according to which the data validity control process 110 manages the reference data storage 105 and according to which the data validity control process 110 assigns validity levels.

An audit trail storage 140 may store the history of changes to data items, including changes to the validity level, preferably together with additional information on the circumstances of the changes, such as "source of information", "operator who requested change of data item" or "date and time of change". It is to be noted that embodiments exist not having such an audit trail storage 140.

A data collection processor 115 to which at least one electronic data source (preferably a data feed) is connected, collects and validates incoming data and forwards the checked and validated data to the reference data storage 105.

A data input processor 120 to which at least one input device (preferably a computer terminal having a keyboard and a screen) is connected, collects and validates manual data inputs and forwards the checked and validated data to the reference data storage 105. Any validation may be controlled by the data validity control process 110.

A reference data outbound interface 125 receives data items, optionally including the respective data validity level for data items, from the reference data storage 105 and formats the data into a data feed to be received by at least one connected user

A reference data online interface 130 may give interactive access to the reference data storage 105, including the respective data validity level for data items, to at least one user. This access may preferably be read-only. Any customer manipulation of the data stored in the reference data storage 105 may be done preferably via the data input processor 120.

A validity-relevant process interface 150 delivers data to at least one process 155 in which the use of the data is process-relevant and may therefore be critical to the process. As apparent from FIG. 1, the validity-relevant processes 155 may preferably be located outside the computer system 100. Preferably, at least one validity-relevant process 155 may be connected to the validity-relevant process interface 150 and the data validity control process 110. It is to be noted that in other embodiments, some or all of the validity-relevant processes 155 may also be incorporated into the computer system 100 itself.

Further, an admin interface 145 may be provided through which an operator can configure processes and properties of the computer system 100 (where applicable). Through the admin interface 145, the operator can manipulate sets of switches, which determine the behaviour of the configurable processes of the computer system 100. Validation rules may be entered through the admin interface 145 into the validation rules storage 135. Data from the audit trail storage 140 can be queried and viewed through the admin interface 145. Preferably, the admin interface 145 is operated through a connected terminal having a screen and an input device such as a keyboard or a pointing device.

There may further be provided a central database for storing data relating to transactions. This database may be part of the reference data storage 105, or may be a separate unit inside (or outside) the computer system 100.

The components mentioned above may be considered to form a preferred embodiment of a reference data system with process-proven data and validity indication for data items. In other embodiments, the same structure may be achieved with a different set up or with other components.

In the following, some processes will be discussed of how the system of FIG. 1 (or other reference data systems according to the invention) may be operated.

### Adding a new instance of a reference data object

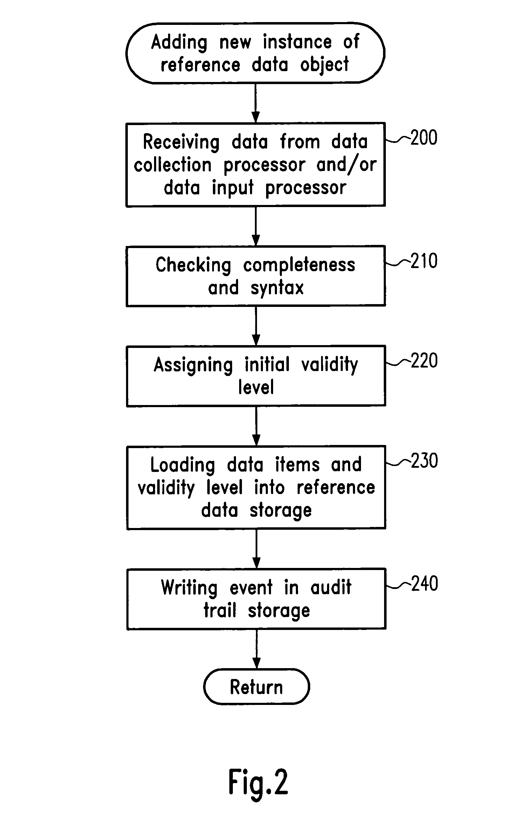

A new instance of a reference data object may be added to the existing set of objects, e.g. a newly issued security or a new banking institution. This may be the starting point of the lifecycle of any object for which reference data is to be stored by the invention. FIG. 2 illustrates an embodiment of such a process.

The depicted process can be triggered in step 200 for instance by manual input via the data input processor 120. An operator can start the new object generation process for instance by pressing a button or a key on a keyboard that is connected to the computer system 100. Alternatively, a new instance of a reference data object may be created in step 200 by the data collection processor 115 when a new instance is delivered by a connected data feed.

Once the available data items for the new instance have been captured in step 200 of FIG. 2, they may be submitted to various coherence, plausibility and syntax checks in step 210. For instance, a check may be done to determine if a received data item that is expected to be an ISIN is a string of exactly 12 alphanumeric signs. Otherwise, it would not be a valid ISIN. Such check functionalities may comprise a set of switches that can be configured through the admin interface 145.

Generally, in the data validity control process 110, the minimum set of data items required for the creation of a new instance of a reference data object may be defined by a set of switches. For instance, the configuration of the data validity control process 110 may require that for a new instance of a banking institution, at least the following data items must be provided through the data input processor 120 or the data collection processor 115: a unique international bank identifier (to uniquely identify the institution), the name of the bank (for reporting purposes), an address (for reporting and communication purposes), and a phone number (for communication with the institution).

In contrast, in order to create a new instance of a security, the data validity control process 110 might be configured in such a way that only a unique security identifier (e.g. International Securities Identification Number ISIN) is required in step 220. Similarly, for creating a new instance of a transaction object, it might be sufficient to receive the transaction's unique ID (identifier).

The data is then forwarded in step 230 by the respective processor (data input processor 120 or data collection processor 115) to the reference data storage 105. Preferably, each data item is stored together with an identifier for the source that has delivered the data item or an identifier for the operator who has manually provided the information to the embodiment.

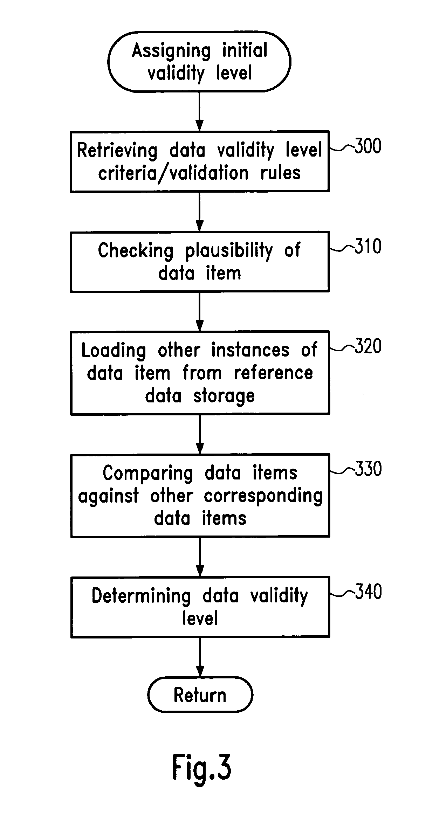

In the present embodiment, the data validity control process 110 may provide a data validity indicator to the reference data storage 105 for some or all of the data items that are newly added (steps 220 and 230). This process is described in more detail below with reference to FIG. 3.

Finally, the data validity control process 110 may record the arrival of a new instance of an object in the audit trail storage 140 (step 240).

### Determining a data validity level for a new data item

Data validity levels may be assigned in step 220 of FIG. 2 on at least two levels: the individual data item and the instance. In other embodiments, data validity levels may also be assigned on other levels (e.g. a set of instances, a data source or any set of data items). On the level of an instance, the data validity may depend on the data validity level of all data items which belong to this instance. It may be derived from the average data validity level or it may be defined as the lowest data validity level among the data items from that instance. Besides, the data validity level of an instance may reflect the completeness of the data set for an instance. Some reference data items may be defined as crucial so that no instance can have a data validity level above a certain degree without certain crucial data items (e.g. an instance of a banking institution may not have a data validity level of "correct" or better without a valid SWIFT code for that bank - even if all other data items have data validity levels of "perfect" or "process proven").

As discussed above, the data validity control process 110 may determine an initial data validity indicator (that indicates an initial validity level) in step 220. An embodiment of this process is depicted in FIG. 3. The data validity indicator may be stored in the reference data storage 105 together with the data item or the instance to which it refers.

The process of data validity level determination is controlled by the data validity control process 110, which is typically a program storage with interfaces to the relevant other processors and the reference data storage 105. The data validity levels for reference data are also managed by the data validity control process 110, and they are stored in the reference data storage 105 together with the data items to which they refer (step 230 of FIG. 2).

From the data collection and data input processes, the data validity control process 110 may determine an initial data validity level in step 340 of FIG. 3. The determination of this initial data validity level is preferably rule-based and can be configured in the data validity control process 110 by a set of switches.

Preferably, the switches are operated via the admin interface 145, and the validation rules may be stored in the validation rules storage 135.

The rules that may be applied in the determination of an initial data validity level can be based on various criteria. Examples of such criteria may be:
- the known quality of specific data types from a vendor, or the stringency of the data collection or data input processes,
- validity checks (such as range checks on numerical data, checks on normal distribution of numerical data if normal distribution is to be expected for certain data items, or orthographic plausibility of text fields), and/or
- the agreement of several data sources (e.g. manual input of a security price via the data input processor 120 and delivery of a price for the same security from a feed via the data collection processor 115) on a given data item.

If no data validity indicator can be determined, the indicator will be empty or set to a default value such as "undetermined" until a validity level can be determined later in the lifecycle of the data item.

The following is an example describing how a data validity level can be determined for a specific data item.

In the example, a new banking institution is to be included in the reference data storage 105. An operator has got notice of this and types the details into the data input processor 120 with a keyboard that is connected to the computer system 100. A data feed from a data provider connected to the data collection processor 115 delivers information on the same banking institution. The data validity levels to be used have been defined as "incorrect", "suspicious", "unchecked", "validated", and "process proven", with validation rules defined accordingly. For the address of the banking institution, the configuration can then be such that the data validity control process 110 sets the initial data validity level to one of the values listed in the table below, depending on whether the respective condition is fulfilled.

| **Validity level** | **Condition** |
|---|---|
| "validated" | The manual input matches completely the address information from the data feed. |
| "unchecked" | The data feed does not provide any information on the address of the information. |
| "suspicious" | The address information provided by the data feed differs from the information provided by the operator and both information sources (data feed and manual input) have been defined to be of the same reliability. |
| "incorrect" | The number of digits of a postal code for an address in a German city does not equal five. |

It is to be noted that the above validity indicator levels are exemplary only, and other indicator levels with other definitions may be configured.

In one embodiment, the initial assignment of a data validity indicator is done in the following way: the data collection processor 115 or data input processor 120 receives a new data item and forwards it to the data validity control process 110 (step 200 of FIG. 2). The data validity control process 110 then exerts the abovementioned plausibility checks in step 310 of FIG. 3 (after having retrieved the appropriate data validity level criteria and validation rules in step 300) and compares the data item to other corresponding data items (steps 320 and 330) that may already be in the reference data storage 105. It then defines a data validity level (based on the rules deposited in the validation rule storage 135 and the results of the check procedures) in step 340. The data item and the assigned data validity indicator is then sent back to the data collection processor 115 or data input processor 120 which in turn writes the data item in the reference data storage 105.

In another embodiment, the initial assignment of a data validity indicator is done in the following way: the data collection processor 115 or data input processor 120 receives a new data item in step 200 and informs the data validity control process 110 of this arrival. The data validity control process 110 may then check if other instances of this data item are already in the reference data storage 105. If so, it sends these data items (preferably together with their data validity indicator) to the data collection processor 115 or the data input processor 120 and instructs this processor to apply all appropriate check procedures as defined in the validation rules storage 135. The data collection processor 115 or data input processor 120 then sends the results of the checks to the data validity control process 110, which in turn assigns a data validity level to the data item based on the results of the checks and according to the rules stored in the validation rules storage 135. The data validity control process 110 then sends the assigned data validity indicator to the respective data input processor 120 or data collection processor 115, which in turn writes the data item together with the data validity indicator into the reference data storage 105.

### Validating data items by quality assurance processes

The data validity control process 110 can be configured in such a way that it requires quality assurance processes for certain data items at certain times. This may be particularly important for event-related information (e.g. corporate actions or account events) where process-provenness can only be achieved after the event has become effective. In order to ensure a high quality level for such data items and in order to manage and check the quality level of these data items, quality assurance processes can be applied in the computer system 100. Among such processes are four-eyes-principle (an operator must check the information and confirm it, e.g. by pressing a button), re-keying (an operator or a supervisor must re-enter the data a second time) or additional research (an operator must track down the information to the original source and change data items if necessary).

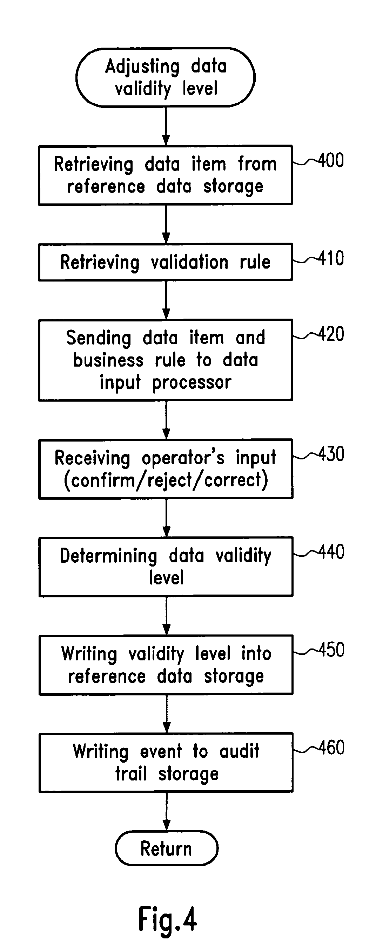

FIG. 4 illustrates the process of adjusting a data validity level in a quality assurance process according to an embodiment of the invention. In step 400, a data item is retrieved from reference data storage 105. Further, validation rules are retrieved from validation rules storage 135 (step 410). Then, the retrieved data item and validation rule are sent in step 420 to the data input processor 120. The operator may now input his/her confirmation, rejection or correction (step 430). Based on this input, a data validity level can be determined in step 440. Finally, the determined validity level is written into the reference data storage 105 (step 450), and the event is written to the audit trail storage 460 (step 460).

In a preferred embodiment, validation rules can be configured via a set of switches through the admin interface 145. Such validation rules may require the validation of some or all data items at certain points in time. For instance, a rule can require that each data item delivered through the data collection processor 115 must be validated manually by an operator. The computer system 100 may therefore display all new data items in a display device (preferably through a screen that is connected to the data input processor 120) for control by an operator. The data validity control process 110 will only set the data validity indicator to, e.g., "confirmed" or "valid", after an operator has confirmed the data items (preferably by pressing a specific button on a keyboard connected to the data input processor 120). The validation rule might be set in such a way that the data validity control process 110 sets the data validity indicator for each data item to "wrong" until the data item has been confirmed by an operator. Alternatively, the data validity control process 110 may be configured in such a way that it accepts each new data item (e.g. by leaving the initial data validity indicator unchanged). In this case the data validity indicator would only change if an operator gives additional information on the data quality of a data item, e.g. through the data input processor 120, such as "the data item is wrong" or "the data item is confirmed".

In an embodiment, all quality assurance processes are initiated and managed by the data validity control processes 110. In other embodiments, other processors such as the data input processor 120, the data collection processor 115 or the reference data outbound interface 125 may also contain validation rules.

The data validity level of a data item may be defined by defining an initial data validity level, performing quality assurance processes, and providing a feedback from validity-relevant processes 155. In the present embodiment, the various validity-defining processes may work together on a "valid until changed" basis. This means that the data validity control process 110 only changes a data validity indicator when, based on the validation rules stored in the validation rules storage 135, new information on the quality of a data item is available. Generally new information on the quality of a data item results from a quality assurance process or from feedback from validity-relevant processes 155 (see below). Other embodiments may require regular update of quality levels by manual confirmation from an operator. For instance, a quality assurance process may be configured in such a way that the data validity item for some or all data items is set to "unconfirmed" when it has not been confirmed by a validity-relevant process 155 or by an operator via manual input within a certain period of time (e.g. 4 weeks).

To give an example, a corporate action event may be considered to have been delivered from a data feed connected to the data collection processor 115. The data validity control process 110 may be configured in such a way that it checks these corporate actions syntactically. When all data items are syntactically correct and the data set for a corporate action is complete, the data is written into the reference data storage 105 with the validity level of "unconfirmed" (step 450). The data validity control process 110 may require that the data items for each new corporate action event are presented to an operator, preferably via a screen connected to the data input processor 120 (step 420). An operator may now check the data items and then confirm, correct or reject each data items, preferably by pressing the defined buttons on a keyboard connected to the data input processor 120 (step 430). The delivered corporate action event may consist of the following data items:

| **data item** | **value** |
|---|---|
| CA_Type | dividend |
| ISIN_affected | XF0000000001 |
| CA_amount | 2.5 |
| CA_currency | EUR |
| CA_exdate | 02.01.2004 |

Upon delivery of this data to the data collection processor 115, the data validity control process 110 may find, e.g., no syntactical error. As the data set is complete the data items are written into the reference data storage 105 (with a validity indicator of "unconfirmed" for each data item and a validity indicator of "complete, unconfirmed" for the corporate action instance). The data validity control process 110 may then forward the data set to a data storage in the data input processor 120. When an operator logs on to the data input processor 120 the next time, the data set will be displayed. The operator may then check the data manually (e.g. by comparing it to a newspaper announcement or by calling the paying agent of the issuer of the corporate action). If all data items are correct, the operator confirms the data. The data input processor 120 will forward this confirmation to the data validity control process 115, which in turn sets the data validity indicator for all data items of the data set to "confirmed" and for the data instance to "complete, confirmed".

If one or more data items are assumed to be wrong and the operator has identified the correct information, the operator may change a data item and then confirm these changes. In this case the data input processor 120 may write the corrected data to the reference data storage 105, and notify the data validity control process 110. In the present embodiment, the data validity indicator may be set to "confirmed" when the operator has confirmed the original value, and to "updated" when an operator has overwritten the original data with a corrected value.

If the operator finds out that one or more data items are wrong but no correct information is available, the operator will reject the wrong data items. The data input processor 120 will notify the data validity control process 110, which in turn will change the data validity indicator for those data items that have been rejected to "wrong".

Preferably, the data validity control process 110 has a continuous monitoring function which regularly accesses the reference data storage 105 and checks the consistency and completeness of the data items, the instances and the data validity levels. In an example, the data validity control process 110 will notice the deletion of a data item in any instance and consequently set the data validity level for this instance to something like "incomplete" or "insufficient". The checking rules, checking frequency and resulting data validity levels may be configured in the data validity control process 110 via the admin interface 145 and they may be stored in the validation rules storage 135.

In a preferred embodiment, the data validity control process 110 will record any change to the data validity indicator in the audit trail storage 140, preferably including an indicator of the operator who confirmed or rejected a data item and a timestamp indicating the date and time of change.

### Distributing data items to validity-relevant processes

The computer system 100 may provide at least one outbound interface 150 to validity-relevant processes 155. Validity-relevant processes are functions (for instance for financial transaction processes) which make use of the reference data provided and which feedback certain results of the functions in which the reference data has been used. Among the types of systems that may include validity-relevant processes are risk management tools, settlement systems, custody systems, depositary systems, portfolio management systems, index calculation systems, trading systems and compliance monitor systems.

In an illustrative example, a securities settlement system receives a security master file (containing, among other information: ISIN, name, currency, security type, depositary, exchanges on which security is traded, tax information, eligible places of settlement) from the reference data system through the validity-relevant process interface 150. This interface turns on a switch in system 155, which in turn controls the feedback function. The feedback function of system 155 waits for the outcome of at least one process, in which the reference data in question is used. If the process worked fine, i.e. no errors were reported and the final status of the process is successful, system 155 informs the data validity control process 110 that the process has been successful. If the process failed due to wrong reference data (e.g. security could not settle in the specified depositary), system 155 informs the data validity control process 110 that the data has caused an error. If the process failed due to reasons other than the reference data provided, system 155 informs the data validity control process 110 that the data could not be validated because the process has not been completed.

Depending on the feedback from system 155, the data validity control process 110 manages the validity indicator according to defined rules. The rules are configured in the embodiment by a set of switches, preferably managed via an administrator interface 145 connected to the data validity control process 110. Preferably, the validation rules defining the behaviour of the system through the above-mentioned switches are stored in the validation rules storage 135.

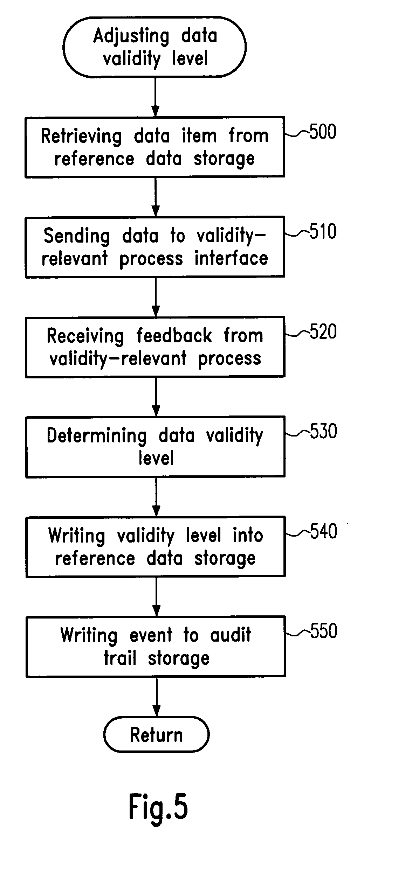

According to the defined rules, the data validity control process 110 may change the validity indicator as illustrated in FIG. 5. In step 500, a data item is retrieved from the reference data storage 105. Steps 510 and 520 are the process steps of sending data to the validity-relevant process interface 150 and receiving a feedback from the validity-relevant process 155. A data validity level is then determined in step 530. Finally, the determined validity level is written into the reference data storage 105 (step 540), and the event is written to the audit trail storage 460 (step 550).

Among the rules possibly used by the data validity control process 110 may be:
- set validity indicator to "process proven" if one process has worked successfully,
- set validity indicator to "process proven" after a plurality of n processes have worked successfully, with n being a predetermined integer number,
- set validity indicator to "wrong" if one process has failed due to reference data problems,
- set validity indicator to "suspicious - manual check required" if one process has failed due to reference data problems, and
- set validity indicator to "unconfirmed" if one process has not been completed due to any problems.

The rules may be applied either to individual data items (i.e. those data items that caused a problem or those data items which worked well in a process) or to the whole data set of an instance (e.g. all data items relating to a financial product even if only the amount outstanding was wrong). The rules may also affect the data validity level of the instance as a whole (e.g. the data validity indicator of an instance is set to "process-proven" after the instance has passed three different relevant processes successfully). It is to be noted that the validity indicator levels used in the rules above are only exemplary, and other indicator levels with other definitions may be configured as well.

### The following examples are illustrative:

In a first example, the name and SWIFT identifier of a banking institution have been used in a transaction process in a connected financial transaction system 155 (e.g. a cash transfer instruction has been remitted). This transaction worked smoothly and ended successfully. The connected financial transaction system 155 informs the data validity control process 110 that the process has employed the reference data successfully. The data validity control process 110 sets the data validity indicator for the data items "name" and "SWIFT identifier" of that institution to "process proven".

In a second example, the ISIN and currency of a security have been used in a transaction process in a connected financial transaction system 155 (e.g. a settlement instruction has been executed). This transaction caused an error and was aborted because the currency given for the instrument by the computer system 100 was not known to the connected financial transaction system 155. The connected financial transaction system 155 informs the data validity control process 110 that the currency has caused an error in the execution of the financial transaction. The data validity control process 110 sets the data validity indicator for the data item "currency" to "wrong".

A third example deals with a specific commodity (e.g. gold bullion of a specific quality). The data items for eligible depositaries have been process-proven, as transactions have taken place that involved transfers to or from those depositaries. Thus, the validity indicator for each depositary is "process proven". However, the name of this commodity class (e.g. "Gold Bullion High Quality") has never been used in any process or transaction. Thus, the validity indicator of the name is "unconfirmed".

In a preferred embodiment, the data validity control process 110 will record any change to the data validity indicator in the audit trail storage 140, preferably including an identifier for the validity-relevant process 155 which proved or rejected a data item, and a timestamp indicating the date and time of change.

### Distributing data items to data users

Data items from the reference data storage 105 can be distributed to users of the reference data system. Preferably, this is done either by at least one electronic feed connected to the computer system 100 via the reference data outbound interface 125, or through an online interface 130 to the reference data storage 105, where clients can request specific data items online. Each user connected to a data feed or to the online access can have user-specific entitlements as to which data they are allowed to receive or to access. The data validity levels for data items are preferably distributed with the data items, in order to inform clients about the degree of reliability that a data item has. In other embodiments, users may not be given access to the data validity levels, or access to data validity levels is managed on a per client or a per data item basis (or a combination thereof).

The outbound data feed 125 can deliver the data to users with configurable frequency, e.g. end of day, every hour or in real-time.

In another embodiment the outbound interface 125 can be configured in such a way that only data items whose data validity indicator meets certain conditions are distributed. Preferably, data items with a validity indicator "wrong" might be blocked by the outbound interface 125. Alternatively, only data items with a validity indicator better than a certain level can be disseminated. The following table gives an illustrative example:

| **Validity indicator** | **Definition of status** | **Data disseminated to user by outbound interface** |
|---|---|---|
| Proprietary | The computer system 100 is the original source and the "single point of truth" of this data item. | Yes |
| Process proven | The data item has been used successfully in validity-relevant processes 155. | Yes |
| Unchecked | The data item has not yet been used in any validity-relevant process 155. | Yes |
| Suspicious | The data item has been employed in a process 155 that was aborted; data item may be wrong. | No |
| Wrong | The data item has been identified as wrong. | No |

It is to be noted that the shown validity indicator levels are only exemplary, and other indicator levels with other definitions may likewise be configured.

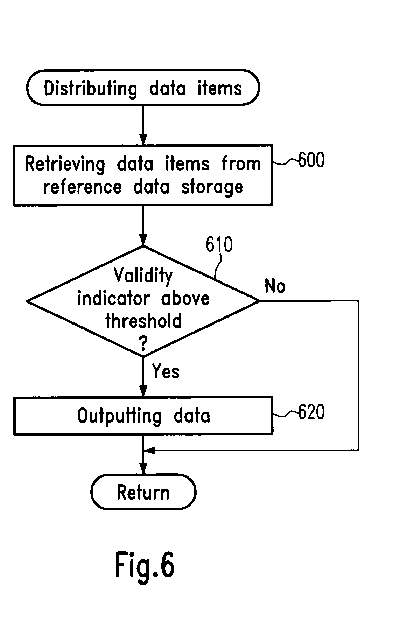

FIG. 6 illustrates the process of distributing data items to data users according to an embodiment of the invention. In step 600, data items are retrieved from the reference data storage 105. Then, a check is performed in step 610 if the validity indicator complies with the requirements, e.g. if it is above a predefined threshold level. If so, the data is output in step 620 via the outbound interface 125 or the online interface 130. Otherwise, the process returns without outputting the data.

### Audit trail

In a preferred embodiment of the invention, an audit trail is recorded for each data item. The audit trail can be maintained by the data validity control process 110 and stored in the audit trail storage 140. Preferably, the audit trail records for each change of data items or data validity indicators the following values:
- the date and time of the change
- the data items affected
- the previous value of the data item
- an identifier or descriptor for the reason why the data item was changed (e.g. "validity-relevant process failed")
- an identifier or descriptor for the user or the process which triggered the change (e.g. "Operator No. 233" or "Settlement machine 29")

With the audit trail, the data quality of a data item and its history can be checked manually by an operator. Preferably, the audit trail storage 140 can be queried and data from it can be viewed through the admin interface 145.

As apparent from the above description of the embodiments, a reference data system is provided for the reliable and efficient collection, aggregation, validation and distribution of reference data for objects in financial transaction processes. Reference data is used to identify and describe financial objects in processes such as fund management, brokerage, compliance controlling, risk measurement, fund administration, reporting, custody or depositary services. The validation of data items is linked to central communication and transaction processes, in which the data is used (transmission of settlement instructions, corporate actions processes, transfer of ownership, administration of assets held in custody etc). The system may assign a data validity status to each data item. The status may range from "proprietary data" (the machine is the ultimate source of the information) to "process proven" (data has been used successfully in certain defined transactions or processes) to "reject" (data may be corrupt or incomplete and needs to be checked) to "incorrect" (data is definitely wrong and needs to be corrected). In a preferred scenario, industry players will only use data that is equal to or above a certain validity status. With an increasing number of process participants using reference data from this machine, the overall data quality in financial transaction processes will increase and the average error rate will decrease.

The technique according to the above described embodiments can be regarded to be an approximation of the idea of a global hub by outsourcing the consolidation efforts to a service provider in conjunction with a "process-provenness" approach to master data aggregation and validation. This ensures that all clients connected to computer system 100 use the same data in their transaction processes, and that data is immediately and consistently corrected whenever wrong data causes problems in financial transaction processes.

With the invention described in this document a provider can produce reliable reference data that integrates an unlimited number of sources, that can be shared without further effort by an unlimited number of industry participants and that works in a highly automated and efficient way. The invention has significant commercial importance: clients who use reference data delivered by the invention should have lower data collection costs, and data vendors who employ the invention for reference data provision may offer higher service level agreements and even data quality guarantees, thus giving better value to their clients.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the scope of the invention. In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

## Claims

1. A data processing apparatus for use in a straight-through processing system, the apparatus comprising:
a data storage unit (105) having data fields for storing a plurality of pairs of first and second data items, each second data item including validation information relating to the associated first data item of the respective pair, said validation information indicating at least one of a plurality of distinct validation levels;
a controller (110, 135) for assigning initial validation levels to second data items and updating assigned validation levels; and
a first data interface unit (150) for interfacing to at least one external device, said external device performing a validity-relevant process (155) in said straight-through processing system,
wherein said controller is arranged for sending at least one first data item stored in said data storage unit to at least one of said external devices via said first data interface unit, and determining an updated validation level to be stored in the respective associated second data item, from feedback information received from the validity-relevant process performed by said external device.

2. The apparatus of claim 1, wherein said feedback information is success/failure information of the validity-relevant process performed by said external device.

3. The apparatus of claim 1 or 2, further comprising:
a second data interface unit (115, 120) for interfacing to at least one external data source to receive first data items; and
a third data interface unit (125, 130) for distributing information relating to stored first and second data items.

4. The apparatus of claim 3, wherein said controller is arranged for controlling said third data interface unit to distribute information relating to stored first and second data items only if the validation levels indicated by the validity information included in the respective second data items meet predefined conditions.

5. The apparatus of one of claims 1 to 4, wherein said initial validation levels are indications that information stored in the respective associated first data items is unconfirmed.

6. The apparatus of one of claims 1 to 5, further comprising:
a second data interface unit (115, 120) for interfacing to at least one external data source to receive first data items,
wherein said controller is arranged for assigning said initial validation levels to said second data items depending on the individual data sources of the respective first data items.

7. The apparatus of one of claims 1 to 6, wherein said data storage unit is further arranged for storing a plurality of pairs of third and fourth data items, each third data item relating to a group of first data items, each fourth data item including validation information relating to the associated third data item of the respective pair, said validation information indicating at least one of said plurality of distinct validation levels, wherein said controller is arranged for handling said fourth data items in the same way as said second data items.

8. The apparatus of claim 7, wherein said controller is arranged for assigning validation levels to be stored in fourth data items based on validation levels pertaining to the first data items in the respective groups to which the associated third data items relate.

9. The apparatus of claim 7 or 8, wherein said controller is arranged for assigning validation levels to be stored in fourth data items based on the completeness of the data in the respective groups to which the associated third data items relate.

10. The apparatus of one of claims 1 to 9, further comprising:
a validation rules storage unit (135) for storing validation rules indicating under which condition to assign which validation level;
wherein said controller is arranged for determining updated validation levels by applying said validation rules stored in said validation rules storage unit.

11. The apparatus of claim 10, further comprising:
an administration interface unit (145) for receiving instructions to configure said validation rules stored in said validation rules storage unit.

12. The apparatus of one of claims 1 to 11, wherein said controller comprises a switch for each process in said straight-through processing system, indicating whether this process is a validity-relevant process, and said controller is arranged for determining whether the respective switch is activated and deciding on the basis of the determined switch position whether the process is a validity-relevant process.

13. The apparatus of one of claims 1 to 11, wherein said controller comprises a switch matrix indicating for each process in said straight-through processing system and each first data item, whether the respective process is a validity-relevant process when applied to the respective first data item, and said controller is arranged for determining whether a switch matrix element is activated and deciding on the basis of the determined switch matrix element whether the process is a validity-relevant process for the respective first data item.

14. The apparatus of claim 12 or 13, wherein said first data interface unit is arranged for further interfacing to at least one external device performing a non-validity-relevant process in said straight-through processing system, and said controller is arranged for sending first data items to external devices performing validity-relevant or non-validity-relevant processes, only if the respective validation levels meet predefined conditions.

15. The apparatus of one of claims 1 to 14, further comprising:
a second data interface unit (115, 120) for interfacing to at least one external data source to receive first data items,
wherein said controller is arranged for determining said updated validation level also from data received through said second data interface unit.

16. The apparatus of claim 15, wherein said controller is arranged for determining said updated validation level from said received data by comparing received first data items with previously received first data items.

17. The apparatus of claim 15 or 16, wherein said controller is arranged for determining said updated validation level from said received data by comparing first data items received from one source with first data items received from another source.

18. The apparatus of one of claims 15 to 17, wherein said controller is arranged for determining said updated validation level from said received data by comparing received first data items with predefined values.

19. The apparatus of one of claims 15 to 18, wherein said controller is arranged for determining said updated validation level from said received data by performing a consistency and/or completeness check.

20. The apparatus of one of claims 15 to 19, wherein said data received through said second data interface unit is data manually input by an operator.

21. The apparatus of claim 20, wherein said controller is arranged for requesting said manual input through said second data interface in case said feedback information received from said validity-relevant process does not meet predefined conditions.

22. The apparatus of claim 20 or 21, wherein said controller is further arranged for requesting said manual input through said second data interface in accordance with predefined rules, independent from any feedback information received from said validity-relevant process.

23. The apparatus of one of claims 1 to 22, further comprising:
an audit trail storage (140) for recording an audit trail for each pair of data items.

24. The apparatus of claim 23, wherein said audit trail comprises the date and time of a change of a data item, and a data item identifier identifying the changed data item.

25. The apparatus of claim 23 or 24, wherein said audit trail comprises previous values of the first and second data items.

26. The apparatus of one of claims 23 to 25, wherein said audit trail comprises an indication on the reason for a change of a data item.

27. The apparatus of one of claims 23 to 26, wherein said audit trail comprises an indication on the user or process which triggered a change of a data item.

28. A device for performing a validity-relevant process (155) in a straight-through processing system, arranged for interfacing to a data processing apparatus according to one of claims 1 to 27.

29. A method of operating a data processing apparatus in a straight-through processing system, the method comprising:
storing a plurality of pairs of first and second data items in a database of the data processing apparatus, each second data item including validation information relating to the associated first data item of the respective pair, said validation information indicating at least one of a plurality of distinct validation levels;
assigning (220, 300-340) initial validation levels to second data items; and
updating (400-460, 500-550) assigned validation levels;
wherein the step of updating comprises:
sending (510) at least one first data item stored in said database to at least one external device performing a validity-relevant process (155) in said straight-through processing system; and
determining (530) an updated validation level from feedback information received from the validity-relevant process performed by said external device.

30. The method of claim 29, adapted to operate a data processing apparatus according to one of claims 1 to 27.
